**Europäisches Patentamt**

**European Patent Office**

**Office européen des brevets**

(19)

(11) Veröffentlichungsnummer: **0 021 280**
**A1**

(12) # EUROPÄISCHE PATENTANMELDUNG

(21) Anmeldenummer: **80103308.5**

(22) Anmeldetag: **13.06.80**

(51) Int. Cl.³: **A 01 K 1/015**

(30) Priorität: **15.06.79 DE 7917235 U**

(43) Veröffentlichungstag der Anmeldung: **07.01.81**
**Patentblatt 81/1**

(84) Benannte Vertragsstaaten: **AT BE CH DE FR GB IT LI LU NL SE**

(71) Anmelder: **Herz, Johanna, Schlachthausstrasse 4, D-7700 Singen (DE)**
Anmelder: **Schmidt, Elisabeth, Liptinger Strasse 10, D-7706 Eigeltingen 2 (DE)**

(72) Erfinder: **Herz, Johanna, Schlachthausstrasse 4, D-7700 Singen (DE)**
Erfinder: **Schmidt, Elisabeth, Liptinger Strasse 10, D-7706 Eigeltingen 2 (DE)**

(54) **Stallboden.**

(57) Bei bekannten aus U-förmigen Paneelen zusammengesetzten Stallböden sind die Stossfugen besonders korrosionsgefährdet, da sich dort Kot und Harn festsetzt und diese Fugen kaum zu reinigen sind. Erfindungsgemäss werden die Paneele (2) über Distanzhülsen (6) miteinander verschraubt, so dass sich ein Spaltenabstand ergibt, der ein Festsetzen von Kot und Harn ausschliesst. Durch zwischen die Paneele (2) eingesetzte Tragstäbe (3) wird erreicht, dass mit einer einzigen preiswerten Paneelform Stallböden unterschiedlicher Tragfähigkeit und Spannweite hergestellt werden können. Durch die Formgebung der Randstege (11) der Paneele (2) und der Tragstäbe (3) wird zusätzlich erreicht, dass die zwischen diesen entstehenden Spalte sich nach unten verbreitern, wodurch eine selbstreinigende Wirkung erzielt wird.

ACTORUM AG

0021280

Johanna Herz, geb. Denzel
Schlachthausstraße 4
D - 7700   Singen

Elisabeth Schmidt, geb. Braun
Liptinger Straße 10
D - 7706   Eigeltingen - 2

STALLBODEN

Die Erfindung betrifft einen Stallboden, der aus mehreren metallischen, langgestreckten Paneelen zusammengesetzt ist, die nach unten gerichtete Randstege aufweisen und auf Spaltenabstand gehalten miteinander verbunden sind.

Es ist bekannt, Stallböden aus einzelnen Paneelen zusammenzusetzen, die häufig mit Lochungen für den Durchtritt von Kot und Harn versehen sind. Die Paneele haben ein U-förmiges Profil mit nach unten gerichteten Randstegen und sind beispielsweise durch Abkanten aus korrosionsbeständigem Blech gefertigt.

0021280

Aus der US-PS 3 722 474 ist ein Stallboden der eingangs genannten Gattung bekannt, bei welchem die Paneele durch Blechbänder miteinander verbunden sind, die quer über die Oberfläche der Paneele gelegt und an der Oberfläche mit diesen verschraubt sind. Die Blechbänder greifen mit sikkenartigen Einformungen zwischen die einzelnen Paneele, wodurch diese auf Spaltenabstand gehalten werden. Dieser Spaltenabstand verhindert ein korrosionsbegünstigendes Festsetzen von Kot und Harn zwischen den Paneelen. Diese Wirkung wird zusätzlich dadurch begünstigt, daß die Randstege der Paneele schräg nach innen geneigt sind, so daß sich die Spalten zwischen den Paneelen nach unten erweitern.

Nachteilig ist bei diesem bekannten Stallboden, daß die auf die Oberfläche aufgeschraubten Blechbänder mit ihren Kanten eine Verletzungsgefahr für die Tiere verursachen und daß sich außerdem zwischen den Paneelen und den Blechbändern Kot und Harn festsetzt, der eine starke Korrosion verursacht.

Die Randstege der Paneele müssen einerseits die der Spannweite des Bodens entsprechende Steifigkeit aufweisen und andererseits bei Belastung des Bodens ein Kippmoment aufnehmen. Größere Spannweiten und Belastungen erfordern daher eine erhebliche Blechstärke der Paneele, so daß diese unwirtschaftlich werden.

Aus der DE-OS 25 26 322 ist ein Stallboden bekannt, der
U-förmige Paneele aufweist, bei denen die Randstege mit
nach außen ausgeprägten Noppen versehen sind, welche
die aneinander anschließenden Paneele auf Spaltenabstand halten. Die Noppen erhöhen die Produktionskosten.
Auch bei diesem Stallboden machen größere Spannweiten
und Belastungen eine größere Blechstärke notwendig.

Weiter ist es bekannt, (z.B. DE-GM 77 19 462, DE-GM 77 23 889,
DE-GM 78 08 361) Paneele aus Strangpreßprofilen zu verwenden. Diese Paneele können zusätzliche parallel zu den Randstegen verlaufende Zwischenstege im Mittenbereich aufweisen.
Durch die Anzahl und Ausbildung der Stege können auf diese
Weise Paneele für die verschiedensten Spannweiten und Lasten hergestellt werden. Für die unterschiedlichen Spannweiten, wie sie sich z.B. für Teilspaltenböden und Vollspaltenböden ergeben, müssen jedoch verschiedene teuere
Strangpreßwerkzeuge aufgelegt werden. Außerdem verursacht
die Vielfalt der unterschiedlichen Paneelformen erhöhte
Kosten der Lagerhaltung.

Diese bekannten stranggepressten Paneele werden häufig
über eine nut- und federartige Verbindung miteinander
verhakt, die das Tragverhalten begünstigt. Diese Verbindung verursacht jedoch wiederum enge Spalten, in denen sich
Harn und Kot festsetzt, wodurch die Korrosion an diesen
Stellen verstärkt wird.

Schließlich sind aus dem DE-GM 77 23 636 Bodenplatten aus Guß bekannt. Diese bestehen aus längs verlaufenden, im Querschnitt tropfenförmigen Tragstäben, die in Abständen von ca. 20 bis 30 cm durch Querstäbe miteinander verbunden sind. Diese Gußbodenplatten können in wirtschaftlicher Weise nur in kleineren Abmessungen und daher mit kleinen Spannweiten hergestellt werden. Diese kleinen Spannweiten machen zusätzliche Unterkonstruktionen notwendig. Neben dem hohen Gewicht der Gußbodenplatten sind die mit diesen Unterkonstruktionen verbundenen zusätzlichen Kosten und Korrosionsmöglichkeiten nachteilig.

Der Erfindung liegt die Aufgabe zugrunde, einen Stallboden der eingangs genannten Gattung so zu verbessern, daß bei wirtschaftlicher Herstellung und Lagerhaltung eine größere Steifigkeit und Belastbarkeit der Böden erreicht wird.

Diese Aufgabe wird erfindungsgemäß dadurch gelöst, daß die Randstege aneinander anschließender Paneele durch mit Distanzhülsen versehene Verschraubung miteinander verbunden sind. Weiter können Tragstäbe zwischen den Paneelen zu diesen parallel verlaufend angeordnet und mit den Randstegen dieser Paneele verschraubt sein, wobei die Distanzhülsen die Paneele und die Tragstäbe auf Spaltenabstand halten.

Vorteilhafte Ausführungsformen und Weiterbildungen der Erfindung sind in den Unteransprüchen angegeben.

Durch die Verschraubung werden die Randstege der aneinander anschließenden Paneele fest miteinander verspannt, so daß sich einerseits ihre Steifigkeit in Längsrichtung erhöht und sie andererseits auch höhere Kippmomente aufnehmen können. Die Distanzhülsen ermöglichen dabei trotz dieser festen Verspannung die Einhaltung eines ausreichenden Spaltenabstandes. Die Paneele können daher mit verhältnismäßig geringer Materialstärke und damit preisgünstig hergestellt werden. Für alle Stallböden kann ein und dieselbe Paneelform verwendet werden. Diese Paneele können als Strangpreßprofil oder aus Blech durch Abkanten hergestellt sein. Bei kleinen Spannweiten werden die Paneele unter Zwischenschaltung der Distanzhülsen unmittelbar miteinander verschraubt. Werden größere Spannweiten benötigt, so werden die Tragstäbe zwischen bzw. neben den Paneelen angeordnet, wobei ebenfalls Distanzhülsen zwischen die Paneele und die Tragstäbe eingesetzt werden. Die Verwendung gleicher Paneele für alle unterschiedlichen Belastungen und Spannweiten verbilligt die Produktion und verringert die Lagerhaltungskosten erheblich. Da bei größeren Spannweiten und größeren Belastungen die erforderliche Stabilität und Steifigkeit durch die Tragstäbe erzielt wird, können außerdem die Paneele selbst mit verhältnismäßig geringer Materialstärke hergestellt werden, was sich auf die Herstellungskosten und Gewicht des Bodens günstig auswirkt.

Sowohl beim unmittelbaren Zusammenfügen der Paneele als auch beim Zusammenfügen mit dazwischen angeordneten Tragstäben bewirken die Distanzhülsen ausreichende Spaltenbreiten, so daß sich Kot und Harn in den Verbindungsspalten nicht festsetzen können und bei der Reinung des Stallbodens vollständig ausgespült werden können.

Die Selbstreinigung der Spalten wird zusätzlich dadurch begünstigt, daß die Randstege der Paneele entweder schräg nach innen geneigt sind oder im oberen Bereich wulstförmig vorragende Verbreiterungen aufweisen. Ebenso können die Tragstäbe im oberen Bereich eine Verdickung aufweisen. Durch diese Maßnahme erhalten die Spalten eine sich nach unten verbreiternde Form, die ein Festsetzen von Kot und Harn in den Spalten verhindert.

Im folgenden wird die Erfindung anhand von in der Zeichnung dargestellten Ausführungsbeispielen näher erläutert. Es zeigen:

Figur 1    eine Draufsicht auf einen Stallboden gemäß der Erfindung,

Figur 2    einen Teilschnitt gemäß der Linie I-I in Figur 1,

Figur 3    einen Figur 2 entsprechenden Teilschnitt einer abgewandelten Ausführungsform des Stallbodens und

Figur 4    einen Figur 2 entsprechenden Teilschnitt einer weiteren Ausführungsform des Stallbodens.

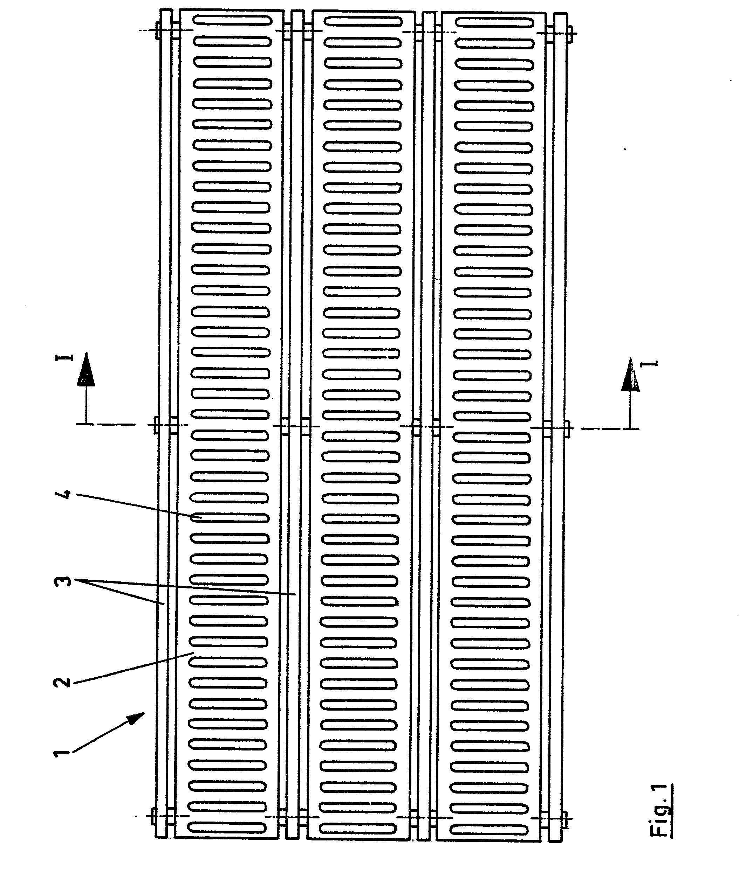

Der in Figur 1 dargestellte Stallboden 1 besteht aus Paneelen 2, die die Form von langgestreckten Blechplatten mit nach unten abgekanteten Randstegen 11 haben. Die Paneele 2 weisen eine Reihe von Lochungen 4 in Form von quer angeordneten Langlöchern auf. Zwischen den Paneelen 2 und an deren äußerem Seitenrand sind Tragstäbe 3 angeordnet, die parallel zu den Paneelen 2 verlaufen.

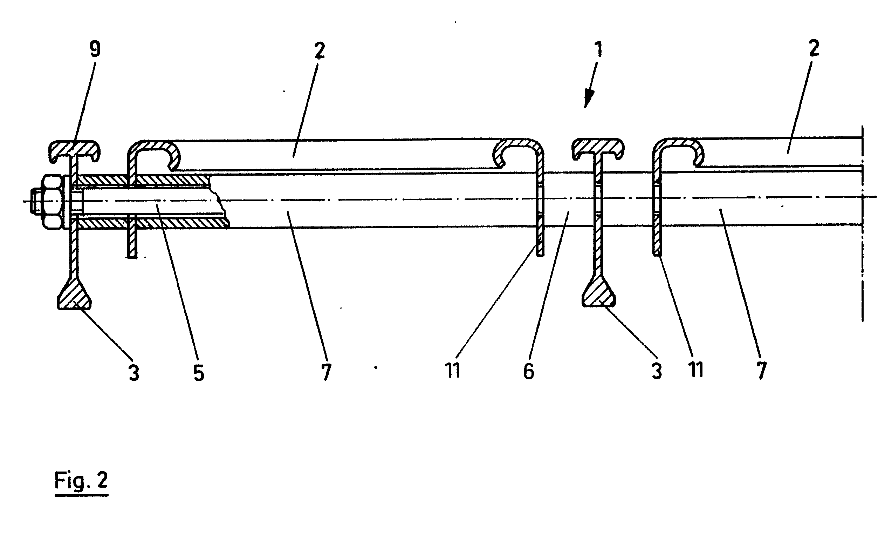

Wir Figur 2 zeigt, sind die Tragstäbe 3 stegförmige Profile, die in ihrem oberen Bereich eine flanschartige Verdickung 9 aufweisen und in ihrem unteren Bereich ebenfalls verdickt sind, um die Steifigkeit zu erhöhen und eine gute Auflagefläche zu bilden.

Die Verbindung der Paneele 2 und der Tragstäbe 3 erfolgt durch Verschraubung mittels Zugstangen 5, die sich in Querrichtung durch mehrere Paneele 2 und Tragstäbe 3 erstrecken. In Figur 1 sind beispielsweise drei Paneele 2 und vier Tragstäbe 3 durch Zugstangen 5 miteinander verbunden, wobei drei Zugstangen vorgesehen sind, die jeweils an den Enden und in der Mitte angeordnet sind. Die Verschraubung erfolgt durch auf die Enden der Zugstange 5 aufgeschraubte Muttern. Zwischen die Tragstäbe 3 und die Randflansche 11 der Paneele 2 ist jeweils eine Distanzhülse 6 eingesetzt, die den Spaltenabstand zwischen den Paneelen 2 und den Tragstäben 3 festlegt. Wie in Figur 2 gezeigt ist, kann zusätzlich eine Stützhülse 7 innen zwischen den Randstegen 11 der Paneele 2 auf der Zugstange 5 vorgesehen sein, um eine bessere Maßgenauigkeit der Breite der Paneele zu erreichen.

Die Verdickung 9 der Tragstäbe 3 dient einerseits als verbreiterte Trittfläche auf der Oberseite des Stallbodens und bewirkt andererseits vor allem, daß sich die zwischen den Tragstäben 3 und den Paneelen 2 gebildeten Spalten von ihrer schmalsten Stelle an der Oberfläche des Stallbodens nach unten verbreitern. Dadurch fällt in die Spalten eindringender oder eingetretener Kot frei nach unten durch, so daß sich eine selbstreinigende Wirkung ergibt.

Diese Öffnung der Spalten nach unten kann zusätzlich oder auch ausschließlich dadurch erreicht werden, daß die Randstege 11 der Paneele 2 nicht rechtwinklig nach unten abgekantet sind, sondern schräg nach innen geneigt verlaufen.

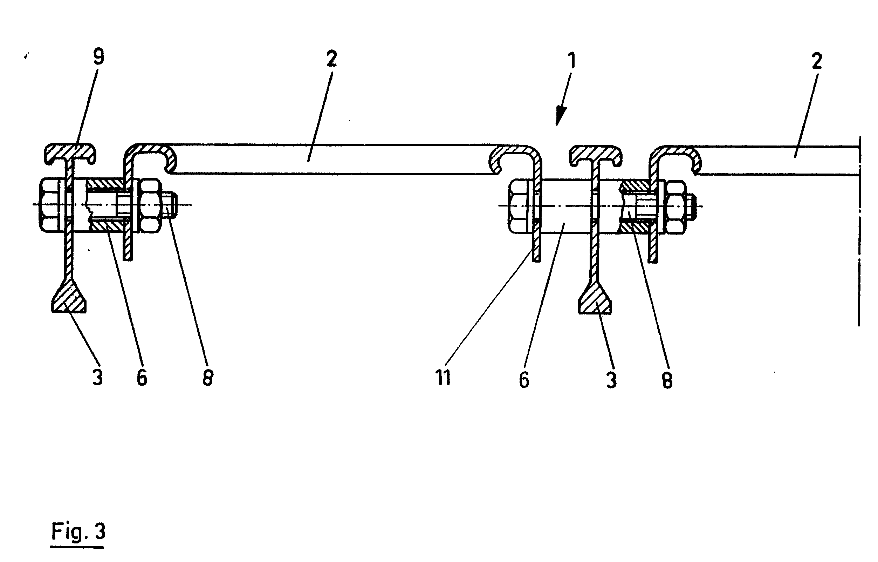

In Figur 3 ist eine abgewandelte Art der Verbindung der Paneele 2 und der Tragstäbe 3 dargestellt. Anstelle einer über mehrere Paneele durchgehenden Zugstange 5 ist jeweils eine kurze Verbindungsschraube 8 vorgesehen, die die Randstege 11 zweier benachbarter Paneele 2 und den dazwischen liegenden Tragstab 3 miteinander verbindet. Die Distanzhülsen 6 entsprechen den bei der Ausführung der Figur 2 verwendeten Distanzhülsen.

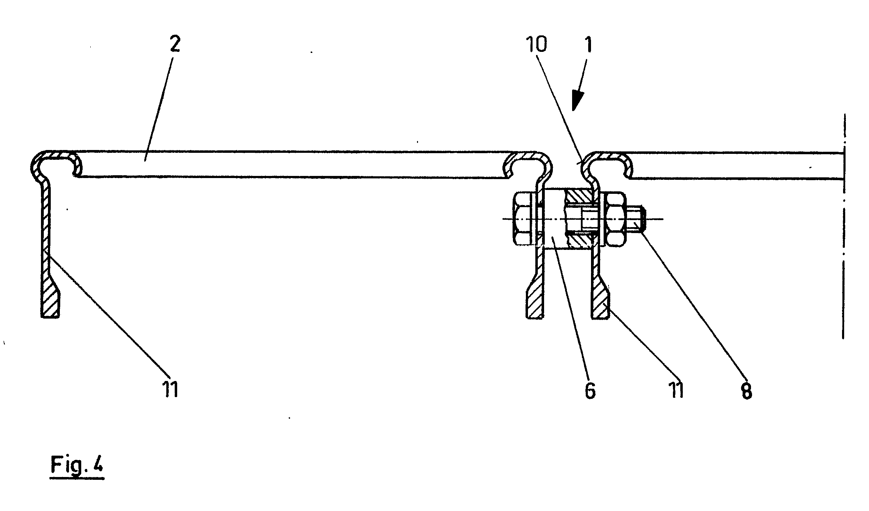

Figur 4 zeigt eine Ausführungsform des Stallbodens, die bei kleineren Spannweiten verwendet werden kann. Bei kleineren Spannweiten reicht die Steifigkeit und Tragfähigkeit der Paneele 2 aus, so daß in der Ausführungsform der Figur 4 auf Tragstäbe verzichtet wird. Mit den Verbindungsschrauben 8 werden die Randstege 11 der benachbarten Paneele 2 unmittelbar miteinander verbunden, wobei nur eine Distanzhülse 6 zwischen die Randstege 11 eingesetzt wird.


Die Paneele 2 weisen in dieser Ausführungsform eine gegenüber den vorhergehend beschriebenen Ausführungsformen abgewandelte Profilform auf. Die Randstege 11 weisen im oberen
Bereich eine überragende wulstartige Verbreiterung 10 auf,
wodurch erreicht wird, daß der zwischen den Randstegen 11
gebildete  Spalt oben seine engste Stelle aufweist und sich
nach unten öffnet, um die selbstreinigende Wirkung zu erzielen.


Da in dieser Ausführungsform der Boden auf den Paneelen 2
aufsitzt, sind die Randstege 11 unten verdickt ausgebildet,
um die Tragfähigkeit zu verbessern. Die Paneele 2 dieser
Ausführungsform sind vorzugsweise als Strangpreßprofile
hergestellt.


Der Stallboden wird vorzugsweise aus Aluminium oder korrosionsbeständigem Stahl hergestellt. Aus Gründen des Gewichtes, der Steifigkeit und des Preises kann es auch zweckmässig sein, die Paneele 2  aus Stahl und die Tragstäbe 3 aus
Aluminium herzustellen.

0021280

PATENTANSPRÜCHE

1. Stallboden, der aus mehreren metallischen, langgestreckten Paneelen (2) zusammengesetzt ist, die nach
   unten gerichtete Randstege (11) aufweisen und auf
   Spaltenabstand gehalten miteinander verbunden sind,
   dadurch gekennzeichnet, daß die Randstege (11) aneinander anschließender Paneele (2) durch mit Distanzhülsen (6) versehene Verschraubung miteinander verbunden sind.

2. Stallboden nach Anspruch 1, dadurch gekennzeichnet,
   daß Tragstäbe (3) zwischen den Paneelen (2) zu diesen
   parallel verlaufend angeordnet und mit den Randstegen
   (11) dieser Paneele (2) verschraubt sind und daß die
   Distanzhülsen (6) die Paneele (2) und die Tragstäbe
   (3) auf Spaltenabstand halten.

3. Stallboden nach Anspruch 1 oder 2, dadurch gekennzeichnet, daß die Randstege (11) der Paneele (2) schräg nach
   innen geneigt sind.

4. Stallboden nach Anspruch 1 oder 2, dadurch gekennzeichnet, daß die Randstege (11) der Paneele (2) im oberen Bereich eine nach außen überragende wulstförmige Verbreiterung (10) aufweisen.


5.  Stallboden nach einem der Ansprüche 2 bis 4, dadurch gekennzeichnet, daß die Tragstäbe (3) im oberen Bereich eine flanschartige Verdickung (9) aufweisen.


6.  Stallboden nach einem der Ansprüche 1 bis 5, dadurch gekennzeichnet, daß er aus Aluminium besteht.


7.  Stallboden nach einem der Ansprüche 1 bis 5, dadurch gekennzeichnet, daß er aus Stahl besteht.


8.  Stallboden nach einem der Ansprüche 1 bis 5, dadurch gekennzeichnet, daß die Paneele (2) aus Stahl und die Tragstäbe (3) aus Aluminium bestehen.

Fig. 1

Fig. 2

Fig. 3

Fig. 4

0021280

| | EINSCHLÄGIGE DOKUMENTE | | | KLASSIFIKATION DER ANMELDUNG (Int.Cl.3) |
|---|---|---|---|---|
| Kategorie | Kennzeichnung des Dokuments mit Angabe, soweit erforderlich, der maßgeblichen Teile | | betrifft Anspruch | |
| | US - A - 4 037 383 (W.H. DIEBOLD et al.) <br> * Spalte 3, Zeilen 36 bis 43; Fig. 1 * <br> -- | | 1 | A 01 K 1/015 |
| | DE - U - 7 000 066 (DYNAMIT NOBEL AG) <br> * Seite 3; Fig. 3, 7 * <br> -- | | 1 | |
| | DE - U - 1 995 755 (B. BARTH KG) <br> * Seite 3, vorletzter Absatz; Fig. 1 * <br> -- | | 3,7 | |
| D,A | DE - A1 - 2 526 322 (F.C. GRAEPEL) <br> * Fig. 1, 5, 6 * <br> -- | | | **RECHERCHIERTE SACHGEBIETE (Int. Cl.3)** <br><br> A 01 K 1/015 <br> E 04 C 2/42 |
| D,A | US - A - 3 722 474 (D.E. VICKSTROM) <br> * Fig. 1 * <br> ---- | | | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| | | | |
|---|---|---|---|
| X | Der vorliegende Recherchenbericht wurde für alle Patentansprüche erstellt. | | |
| Recherchenort <br> Berlin | Abschlußdatum der Recherche <br> 22-08-1980 | Prüfer <br> SCHOFER | |

EPA form 1503.1 06.78